# EUROPÄISCHE PATENTSCHRIFT

(11) **EP 1 397 961 B1**
(45) Veröffentlichungstag und Bekanntmachung des Hinweises auf die Patenterteilung: **28.06.2006**
(21) Anmeldenummer: 02020291.7
(22) Anmeldetag: 11.09.2002
(51) Int. Cl.: A24C 5/34, G01B 11/10

(54) **Verfahren und Vorrichtung zum Messen der Länge und des Durchmessers von Filterstäben**
Method and apparatus for measuring the length and the diameter of filter rods
Procédé et installation pour la mesure de la longueur et du diamètre de tiges de filtre

(43) Veröffentlichungstag der Anmeldung: 17.03.2004
(73) Patentinhaber: Hauni Maschinenbau AG, 21033 Hamburg (DE)
(72) Erfinder: Schröder, Dierk, Dr., 22399 Hamburg (DE); Rinke, Andreas, 23843 Bad Oldesloe (DE); Haul, Michael, 21529 Kröppelshagen (DE); Heikens, Ralf, 21465 Wentorf (DE)
(74) Vertreter: Seemann, Ralph

(56) Entgegenhaltungen:
- EP-A- 0 500 301
- EP-A- 0 555 875
- EP-A- 0 909 537
- DE-A- 2 448 651
- DE-A- 3 414 247
- DE-A- 19 740 070
- GB-A- 2 149 101
- US-A- 3 897 156

## Beschreibung

Die Erfindung betrifft ein Verfahren zur Messung wenigstens einer physikalischen, insbesondere geometrischen, Eigenschaft von in einer Förderleitung geförderten stabförmigen Artikeln der tabakverarbeitenden Industrie, insbesondere Filterstäbe. Ferner betrifft die Erfindung eine Vorrichtung zur Förderung von Filterstäben zu einem Filtermagazin, wobei längsaxial geförderte Filterstäbe queraxial dem Filtermagazin zuführbar sind.

Unter "stabförmigen Artikeln" sind im vorliegenden Zusammenhang Zigaretten, Filterstäbe, Filterzigaretten und ähnliche stabförmige Gegenstände mit einem vorgegebenen Durchmesser und einer vorbestimmten Länge zu verstehen.

In erster Linie befaßt sich die vorliegende Erfindung mit stabförmigen Artikeln, wie Zigaretten und insbesondere Filterstäben, die in einer Förderleitung kontinuierlich gefördert werden. Wenn im folgenden der Einfachheit halber nur noch von stabförmigen Artikeln die Rede ist, so sollen Artikel der oben genannten Art jedenfalls nicht ausgeschlossen sein.

Bei der Herstellung von im Strangverfahren gefertigten Produkten, wie zum Beispiel Filterstäben, wird angestrebt, Durchmesserschwankungen so gering wie möglich zu halten. Abweichungen bezüglich des Durchmessers eines Filterstrangs sind insofern besonders schädlich, da bei aus Filterstopfen und Zigaretten zusammengesetzten Filterzigaretten Stopfen und Zigaretten den gleichen Durchmesser haben müssen, damit ihre Vereinigung, insbesondere durch ein Verbindungsblättchen, erfolgen kann, ohne daß Lücken zwischen dem Blättchen und dem Stopfen oder der Zigarette verbleiben, durch welche Nebenluft eindringen und die Raucheigenschaften verschlechtern könnte.

Eine Vorrichtung zur Förderung von Filterstäben zu einem Filtermagazin bzw. ein entsprechendes Verfahren zur Förderung von Filterstäben zu einem Filtermagazin ist durch das sogenannte Filterstab-Beschickungssystem FILTROMAT 3 FE der Patentanmelderin bekannt. Ein derartiges Filterstab-Beschickungssystem bzw. ein derartiger Filterstabempfänger empfängt längsaxial geförderte Filterstäbe, die zunächst abgebremst werden, um dann längsaxial beschleunigt zu werden und anschließend dem Filtermagazin queraxial zugeführt zu werden. Hierbei sind verschiedene Modulvarianten bekannt. Es existieren beispielsweise Einzelempfänger, Doppelempfänger und Dreifachempfänger. Hierbei ist es möglich, in Abhängigkeit des Bedarfs der Filterstäbe die Geschwindigkeit des Filterstab-Empfängers zu regeln.

Darüber hinaus ist in der Offenlegungsschrift DE-A-197 40 070 eine Fördereinrichtung zum Transportieren von Filterstäben zwischen einer Sendestation und einer Empfangsstation über eine pneumatische Förderleitung beschrieben.

In der Patentschrift DE-C-34 14 247 ist ferner eine Vorrichtung zum Messen des Durchmessers von Filterstäben offenbart, wobei die Durchmessermessung der Filterstäbe mittels eines pneumatischen Meßsystems vorgenommen wird.

Ausgehend von diesem Stand der Technik ist es Aufgabe der vorliegenden Erfindung, auf einfache und schnelle Weise eine Überprüfung und Kontrolle von Filterstäben während ihrer Förderung in ein Filtermagazin durchzuführen, wobei es möglich sein soll, unterschiedliche physikalische Eigenschaften der Filterstäbe exakt zu erfassen.

Die Aufgabe wird gelöst mittels eines Verfahrens mit den Merkmalen des Anspruchs 1. Mittels der erfindungsgemäßen Lösung ist es möglich, jeden Filterstab, während der Förderung des Filterstabs zu einem Magazin schnell und präzise zu untersuchen. Hierdurch wird eine Art Eingangskontrolle bzw. -überwachung der Filterstäbe vor dem Magazin ausgeführt, so daß insgesamt der Produktionsprozeß von Filterzigaretten verbessert werden kann, da nur Filterstäbe mit vorbestimmten Eigenschaften ins Magazin gefördert werden.

Erfindungsgemäß werden als physikalische Eigenschaften der stabförmigen Artikel die Länge und der Durchmesser der Artikel gemessen. Anhand der geometrischen Abmessungen der Filter können fortlaufend deren Durchmesser und Länge überwacht werden.

Im Rahmen der Erfindung soll es auch möglich sein, daß wenigstens zwei unterschiedliche physikalische Eigenschaften gemessen werden, so daß mittels zweier charakteristischer Zustände bzw. Eigenschaften die (Eingangs-)Überwachung der Filterstäbe verbessert wird.

In einer Weiterbildung der Erfindung ist vorgesehen, daß die wenigstens zwei unterschiedlichen physikalischen Eigenschaften gleichzeitig gemessen werden, so daß der apparative Aufwand gering gehalten wird, da mittels einer Meßeinrichtung beispielsweise zwei Eigenschaften, Durchmesser und Länge, simultan ermittelt werden.

Gemäß einer bevorzugten Ausführungsform wird eine physikalische Eigenschaft mehrmals, insbesondere gleichzeitig, gemessen. Hierdurch werden beispielsweise genauere Meßergebnisse und Aussagen z.B. über den Durchmesser von den (einzelnen) Filterstäben erzielt.

Ist beispielsweise eine Prüfkammer, wie sie in der Patentschrift DE-C-34 14 247 beschrieben ist, in der Förderleitung vorgesehen, ist es zusätzlich möglich, daß eine physikalische Eigenschaft pneumatisch gemessen wird. Diese Messung kann zusätzlich oder alternativ zur optischen Durchmessermessung ausgeführt werden.

Ferner ist in einer Weiterbildung vorgesehen, daß nach Messung wenigstens einer physikalischen Eigenschaft geprüft wird, ob das Meßergebnis innerhalb eines vorbestimmten Meßtoleranzbereiches liegt, so daß die Eingangskontrolle der Filterstäbe verbessert und dadurch die Qualität von hergestellten Filterzigaretten mit den geprüften Filtern gesteigert werden. Der Erfindung liegt der Gedanke zugrunde, daß anhand der Qualitätskontrolle bestimmter physikalischer, insbesondere geometrischer, Eigenschaften der Filterstäbe nur einwandfreie Filterstäbe zur Herstellung von Filterzigaretten verwendet werden. Bei Formatlängen von 60 bis 180 mm sollen daher die Filterstäbe innerhalb eines vorgegebenen Toleranzbereiches von beispielsweise 0,1 mm liegen, so daß nur untersuchte Filterstäbe für den weiteren Produktionsweg zugelassen werden. Diese Qualitätskontrolle von Filterstäben ist insbesondere dann bewährt, wenn aus den untersuchten Filterstäben anschließend Multisegmentfilter hergestellt werden, da hierdurch erfindungsgemäß vermieden wird, daß einzelne Segmente eines Multisegmentfilters mit physikalischen, insbesondere geometrischen Fehlern behaftet sind. Alternativ werden Multisegmentfilter als Filterstäbe durch die Förderleitung gefördert und auf ihre physikalischen Eigenschaften überprüft.

Des weiteren wird vorgeschlagen, daß bei einer Abweichung des Meßergebnisses der Artikel aus der Förderleitung und/oder dem Produktionsweg entfernt wird, so daß nur Filterstäbe mit einer bevorzugten Güte zur Herstellung von Multisegmentfiltern und Filterzigaretten verwendet werden.

Außerdem ist gemäß einer Weiterbildung des Verfahrens vorgesehen, daß die Messung nach Auslösung eines Startsignals, insbesondere einer Lichtschranke, erfolgt. Bei Durchbrechung einer Lichtschranke durch einen geförderten Filterstab wird ein Startsignal erzeugt, so daß nach Ablauf einer gewissen Zeitdauer die Meßeinrichtung aktiviert wird. Bei seriell geförderten Filterstäben in einer Förderleitung wird somit jeder einzelne Filterstab untersucht.

Insbesondere wird die wenigstens eine physikalische Eigenschaft im Endbereich des Artikels gemessen. Durch eine genaue Positionsermittlung des Kopfbereiches bzw. beider Kopfbereiche des Artikels kann die Länge ermittelt werden.

Ferner erfolgt die Messung, insbesondere die Messung der Länge, mittels zweier Meßstellen entlang der Förderstrecke der Artikel.

Bevorzugterweise werden die Artikel und/oder die Meßstellen mittels wenigstens einer Lichtquelle, insbesondere Laserlichtquelle, mit Licht beaufschlagt. Vorzugsweise wird die eine physikalische Eigenschaft anhand des durch die Lichtquelle beaufschlagten Bereiches der Artikel und des erzeugten Helligkeitsprofils bzw. Schattens gemessen. Mittels des erzeugten Schattens bzw. Schattenbildes eines beleuchteten Artikels können sehr genau die Abmessungen des Artikels festgestellt werden.

Insbesondere wird das Helligkeitsprofil mittels eines Sensors, insbesondere Zeilensensors, erfaßt. Derartige Zeilensensoren haben sich in der Hochgeschwindigkeitssensorik für Durchmesser und Kanten von Gegenständen bewährt.

Ferner wird die Aufgabe gelöst mittels einer Vorrichtung mit den Merkmalen des Anspruchs 13.

Vorteilhafterweise ist die Meßeinrichtung zur Messung von geometrischen Eigenschaften der Filterstäbe ausgebildet.

Bevorzugterweise ist die Meßeinrichtung entlang einer Förderleitung der Filterstäbe angeordnet, in der die Filterstäbe längsaxial gefördert werden.

Zur Ausbildung einer Eingangsqualitätskontrolle ist vorzugsweise die Meßeinrichtung zwischen einem Bremsmittel, insbesondere Bremsrollenpaar, und einem Beschleunigermittel, insbesondere Beschleunigerrollenpaar, für die Filterstäbe angeordnet.

Gemäß einer alternativen Ausführungsform ist vorgesehen, daß die Meßeinrichtung an einem Querfördermittel, insbesondere Trommel, für die Filterstäbe angeordnet ist. Hierdurch können die geometrischen Eigenschaften der Filterstäbe auf der Trommel erfaßt werden. Bei Messung der Länge der Filterstäbe ist somit nur eine Meßstelle notwendig, da durch einen fixen Anschlagpunkt für den Filterstab auf der Trommel ein definierter Meßpunkt bzw. Bezugspunkt vorgegeben ist.

Um eine Hochgeschwindigkeitssensorik auszubilden, ist die Meßeinrichtung mit wenigstens einer Lichtquelle, insbesondere Laserlichtquelle, und mit wenigstens einem Sensor, insbesondere Zeilensensor, ausgebildet.

Besonders vorteilhaft ist es, wenn die Meßeinrichtung derart ausgebildet ist, daß gleichzeitig die Länge und der Durchmesser der Filterstäbe gemessen werden. Dadurch wird der Aussagewert der Eingangskontrolle von Filterstäben bei der Überführung in ein Filtermagazin gesteigert. Insgesamt werden nur geprüfte und gemessene Filterstäbe für den Herstellungsprozeß von Filterzigaretten bzw. Multisegmentfiltern zugelassen.

Soll nur eine Lichtquelle, insbesondere Laserlichtquelle für die Messung verwendet werden, ist vorgesehen, daß die Meßeinrichtung wenigstens einen Spiegel oder eine Spiegelanordnung aufweist. Außerdem wird dadurch der Kostenaufwand durch die Verwendung von nur einer Laserlichtquelle und unter Umständen eines Zeilensensor reduziert.

Weiterhin ist in einer besonders bevorzugten Ausführungsform eine Auswerteeinrichtung für die Meßergebnisse der Meßeinrichtung vorgesehen.

Gemäß einer vorteilhaften Weiterbildung der Erfindung wird außerdem vorgeschlagen, daß die Auswerteeinrichtung mit einer Auswurfeinrichtung für die Filterstäbe verbunden ist, so daß nur einwandfreie Filterstäbe dem Filtermagazin zugeführt werden. Liegen die Meßergebnisse bei einem Filterelement außerhalb eines vorbestimmten Toleranzbereiches, so wird dieser fehlerhafte Filterstab mittels dieser Selektionseinrichtung aus der Förderleitung aussortiert.

Die Erfindung wird nachstehend und ohne Beschränkung des allgemeinen Erfindungsgedankens anhand der Zeichnungen beschrieben. Bezüglich aller im Text nicht näher erläuterten erfindungsgemäßen Einzelheiten wird auf die Zeichnungen verwiesen. Es zeigen:
- Fig. 1: eine schematische Seitenansicht einer Empfangsstation;
- Fig. 2.: eine schematische Darstellung einer erfindungsgemäßen Meßeinrichtung in einer ersten Ausführungsform;
- Fig. 3a, 3b: Helligkeitsintensitätsprofile in den Endbereichen eines Filterelements;
- Fig. 4: in schematischer Ansicht eine weitere erfindungsgemäße Meßeinrichtung;
- Fig. 5: schematisch ein Helligkeitsintensitätsprofil;
- Fig. 6: eine weitere Meßeinrichtung zur Erfassung des Durchmessers von Filterstäben in einer Queransicht;
- Fig. 7a bis 7c: in schematischer Darstellung verschiedene Ansichten einer weiteren Meßeinrichtung;
- Fig. 8: in schematisierter Querschnittsdarstellung eine weitere erfindungsgemäße Meßeinrichtung.

In den folgenden Figuren sind jeweils gleiche oder entsprechende Teile mit den selben Bezugszeichen bezeichnet, so daß auf eine erneute Vorstellung verzichtet wird und lediglich die Abweichungen der in diesen Figuren dargestellten Ausführungsbeispiele gegenüber dem ersten Ausführungsbeispiel erläutert werden.

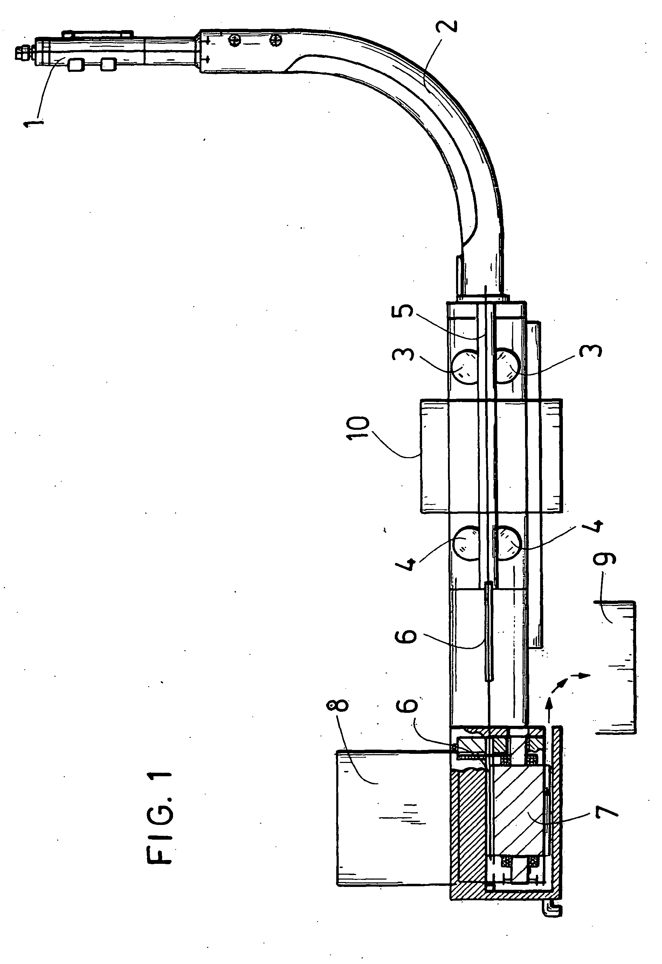

Fig. 1 zeigt einen Filterstabempfänger zur Förderung von Filterstäben 6 in ein Filtermagazin 8. Die in das Filtermagazin 8 eingeführten Filterstäbe 6 dienen dazu, nachdem diese beispielsweise in Filterstäbe zweifacher Gebrauchslänge geschnitten wurden, mit Filterstockpaaren zusammengeführt zu werden, um Filterzigaretten herzustellen.

Die in das Filtermagazin 8 zugeführten Filterstäbe 6 können auch dazu dienen, in entsprechende Filtersegmente zerschnitten, und einer Anordnung von Filtersegmenten zur Herstellung Multisegmentfiltern zugeführt zu werden. Die Einrichtung kann hierzu mehreren oder sämtlichen Funktionseinheiten einer Einrichtung zum Zusammenstellen von Gruppen von Filtersegmenten zur Herstellung von Multisegmentfiltern der tabakverarbeitenden Industrie gemäß der Patentanmeldung mit dem Aktenzeichen DE 101 55 292.0 der Anmelderin zugeordnet sein.

Die Filterstäbe 6 mit einer n-fachen Gebrauchslänge werden über eine hier nicht dargestellte Rohrleitung von einer Filterherstellmaschine mittels eines Filterstabsenders einer Anschlußleitung 1 zugeführt. Die Filterstäbe 6 werden beabstandet im Zuführrohr zur Anschlußleitung 1 gefördert und gelangen dann in eine Bogenführung 2, um mittels Bremsrollen 3 in einem Kanal 5 abgebremst zu werden. Anschließend werden die Filterstäbe 6 mittels einer Beschleunigerrolle'4 über eine nicht dargestellte Führung in eine Trommel 7 gefördert. Die Trommel 7 verfügt über Aufnahmemulden, in denen die zugeförderten Filterstäbe 6 angeordnet werden. Weitere Einzelheiten können der europäischen Patentanmeldung "Vorrichtung und Verfahren zur Förderung von stabförmigen Filterelementen" der Patentanmelderin mit dem gleichen Anmeldedatum der vorliegenden Patentanmeldung entnommen werden.

Zwischen dem Bremsrollenpaar 3 und dem Beschleunigerrollenpaar 4 ist eine erfindungsgemäße Meßvorrichtung 10 zur Messung der physikalischen Eigenschaft, d.h. der Länge und des Durchmessers, der Filterstäbe 6 angeordnet. Wird mittels der Meßvorrichtung 10 festgestellt, daß ein bestimmter Filterstab 6 vorgegebenen Gütekriterien nicht genügt, so wird der entsprechende Filterstab 6, das sich auf der Trommel 7 sich befindet, über eine hier nicht dargestellte Auswerfeinrichtung von der Trommel 7 entnommen und in einen Auffangbehälter 9 ausgeworfen. Dadurch werden fehlerbehaftete Filterstäbe 6 aus dem weiteren Produktionsweg entfernt:

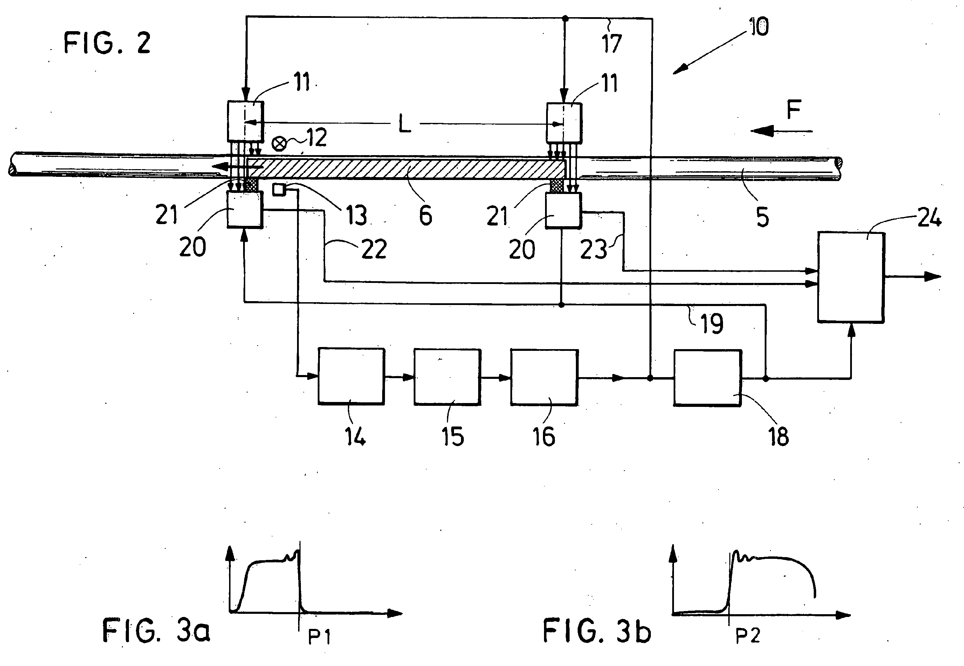

In Fig. 2 ist schematisch eine Meßvorrichtung 10 dargestellt, mittels der die Länge des Filterstabs 6 ermittelt wird. Der Filterstab 6 wird in Förderrichtung (Pfeilrichtung F) im Kanal 5 transportiert.Das vordere Kopfende des Filterstabs 6 durchbricht dabei den Lichtstrahl einer Lichtschranke, bestehend aus der Lampe 12 und dem Sensor 13. Durch die Unterbrechung der Lichtschranke wird mittels des mit dem Sensor 13 verbundenen Kantendetektors 14 festgestellt, daß die Lichtschranke vom Filterstab 6 durchbrochen wurde. Dadurch wird ein Verzögerungsglied 15 aktiviert, daß nach Ablauf einer vorbestimmten Zeitdauer anschließend ein Startglied 16 einschaltet. Die Zeitdauer des Verzögerungsgliedes 15 entspricht im wesentlichen der Zeitdauer, die der Filterstab 6 braucht, um von der Lichtschranke mit seinen Enden in den Meßbereich der beiden, im Abstand der Filterlänge L angeordneten Meßstellen zu gelangen. Nach Auslösen des Startgliedes 16 werden über eine Leitung 17 zwei Laserlichtquellen 11 gleichzeitig aktiviert. Die Laserlichtquellen 11 sind vorzugsweise als Laserpulsquellen ausgebildet.

Die beiden Laserlichtquellen 11 sind im Abstand L angeordnet, der im wesentlichen der Länge der Filterstäbe 6 entspricht. Durch den ausgesandten Laserpuls mit einer vorbestimmten Breite werden jeweils die Enden des Filterstabs 6 mit Licht beaufschlagt. Ein Teil des Laserstrahls wird dabei vom jeweiligen Kopfende ausgeblendet, während der andere Teil ungehindert von einem Sensor 20, insbesondere Zeilensensor, erfaßt wird. Durch die Ausblendung eines Teils des Laserstrahls entsteht auf der der Laserlichtquelle 11 abgewandten Seite des Filterstabs 6 ein Schatten 21, so daß dieser Schattenbereich 21 als dunkle Stelle in einem Helligkeitsintensitätsprofils erfaßt wird.

Gleichzeitig mit dem Auslösen der Laserlichtquellen 11 wird von Startglied 16 ein weiteres Startglied 18 zum Auslesen der Helligkeitswerte bzw. der Intensitätsprofile der Sensoren 20 aktiviert. Das Startglied 18 ist über eine Verbindung 19 mit den beiden im Endbereich des Filterstabs 6 angeordneten Zeilenkameras 20 verbunden. Durch das Startglied 18 ausgelöst, werden die Intensitätswerte der Zeilenkameras 20 über Leitungen 22, 23 auf einen Mikrocomputer 24 gegeben, mittels dem die Helligkeitsverläufe in den Zeilenkameras 20 ausgewertet werden.

In den Figuren 3a, 3b sind Intensitätsverläufe der Helligkeit dargestellt, die jeweils am (in Förderrichtung) vorderen Kopfende und hinteren Kopfende des Filterstabs 6 erfaßt werden. Anhand des Helligkeitssprungs am vorderen Ende (Fig. 3a) und einer mittels des Mikrocomputers 24 ermittelbaren Pixelnummer der Zeilenkamera 20 kann exakt ein Anfangspunkt und somit die Lage des Kopfes des Filterstabs 6 ermittelt werden. Das selbe gilt auch für den in Förderrichtung hinteren Bereich des Filterstabs (Fig. 3b) so daß anhand der beiden ermittelten Positionen P1, P2 und dem Abstand zwischen den Helligkeitssprüngen, die jeweils von den Zeilenkameras 20 erfaßt werden, die Länge des Filterstabs 6 bestimmt wird.

Zur Erfassung der Positionen der Kopf-/Endbereiche der Filterstäbe 6 eignen sich beispielsweise Laserprojektions- und Diffraktionsmeßsysteme der Firma Schäfter + Kirchhoff GmbH, Hamburg (DE), bestehend aus Puls-Laserdioden und CCD-Zeilenkameras.

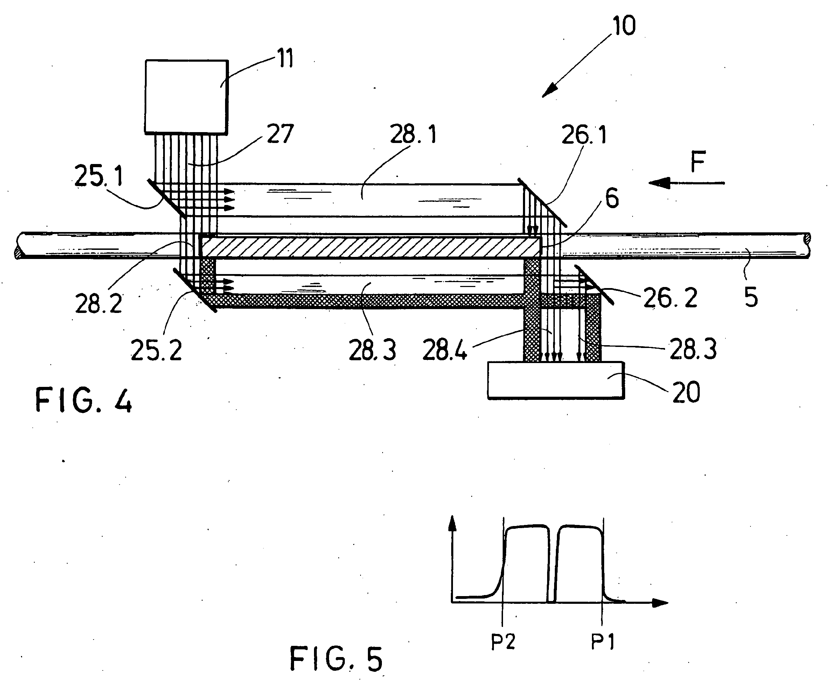

In Fig. 4 ist ein weiteres Beispiel einer erfindungsgemäßen Meßvorrichtung 10 dargestellt, bei dem mittels nur einer Laserlichtquelle 11 und einem Zeilensensor 20 die Länge eines Filterstabs 6 ermittelt wird. Hierbei wird ein Lichtstreifen 27, der von der Laserlichtquelle 11 ausgesendet wird, in zwei Teilstrahlen 28.1 und 28.2 aufgeteilt. Der erste Teilstrahl 28.1 wird an einem Spiegel 25.1 um 90° umgelenkt, so daß der Teillichtstreifen 28.1 längs und parallel des Filterstabs 6 geführt wird. Der zweite Teillichtstreifen 28.2 beaufschlagt den (vorderen) Kopfbereich des Filterstabs 6 teilweise, so daß an einem zweiten Spiegel 25.2 nur ein Teil des Teillichtstreifens 28.2 reflektiert wird. Aus dem anderen Teil des Teillichtstreifens 28.2 wird ein Schattenbereich durch das hintere Kopfende ausgeblendet. Der teilweise ausgeblendete Teillichtstreifen 28.2 wird als Teillichtstreifen 28.3 parallel zumTeillichtstreifen 28.1 geführt und an einem Spiegel 26.2 um 90° reflektiert, so daß das Helligkeitsintensitätsprofil dieses Teilstreifens 28.3 auf den Zeilensensor 20 gelenkt wird.

Der parallel zum Filterstab 6 geführte, nicht ausgeblendete Teillichtstreifen 28.1 wird an einem Spiegel 26.1 im Bereich des zweiten (hinteren) Kopfendes um 90° umgelenkt, so daß ein Teil dieses umgelenkten Lichtstreifens 28.1 vom zweiten Kopfende des Filterstabs 6 ausgeblendet wird und als Teillichtstreifen 28.4 auf den Zeilensensor 20 gegeben wird.

Die Spiegelpaare 25.1, 25.2 und 26.1, 26.2 sind zur Führung der Lichtstreifen parallel zueinander und versetzt sowie in einem Winkel von 45° quer zum Filterstab 6 bzw. zum Kanal 5 angeordnet.

Das mittels des Zeilensensors 20 erfaßte Intensitätsprofil ist in Fig. 5 dargestellt, wobei anhand der Helligkeitssprünge die exakten Positionen P1, P2 der Endbereiche des Filterstabs 6 berechnet werden und somit die Länge des Filterstabs 6 bestimmt wird.

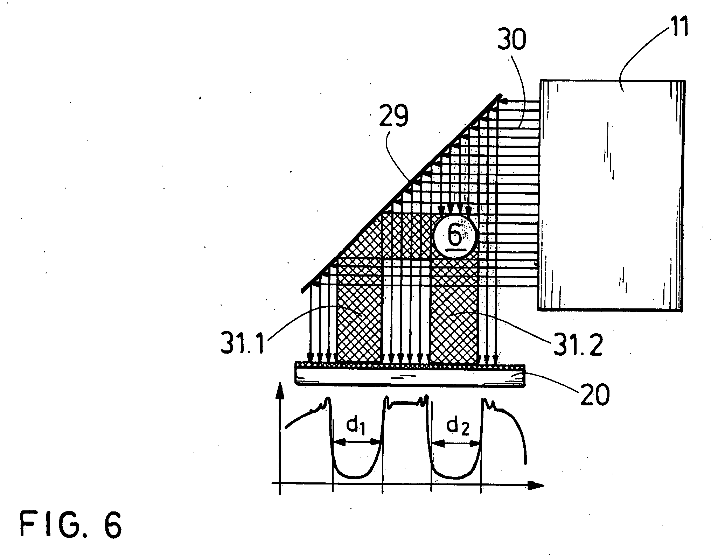

In Fig. 6 ist ein weiteres Beispiel einer Meßvorrichtung gemäß der Erfindung im Querschnitt schematisch dargestellt. Mittels der Meßvorrichtung kann der Durchmesser des Filterstabs 6 zweifach ermittelt werden. Von der Laserlichtquelle 11 wird ein Lichtstreifen 30 mit einer vorbestimmten Breite ausgesendet, der an einem schräg um 45° gegen die Horizontale und dem Lichtstreifen 30 geneigt angeordneten Spiegel 29 um 90° umgelenkt wird. Ein (unterer) Teil des Lichtstreifens 30 trifft horizontal auf den Filterstab 6 und erzeugt einen horizontalen Schatten mit der Breite eines ersten Durchmessers d₁ des Filterstabs 6, der als Schatten 31.1 auf dem Zeilensensor 20 festgehalten wird. Ein zweiter Teil des Lichtstreifens 30 wird zunächst am Spiegel 29 reflektiert und trifft vertikal auf den Filterstab 6, so daß ein vertikaler Schatten 31.2 mit einer Breite eines zweiten Durchmessers d₂ auf dem Zeilensensor 20 erzeugt wird. Durch das Helligkeitsintensitätsprofil werden in einer Messung gleichzeitig sowohl der Durchmesser d₁ als auch der Durchmesser d₂ des Filterstabs 6 ermittelt.

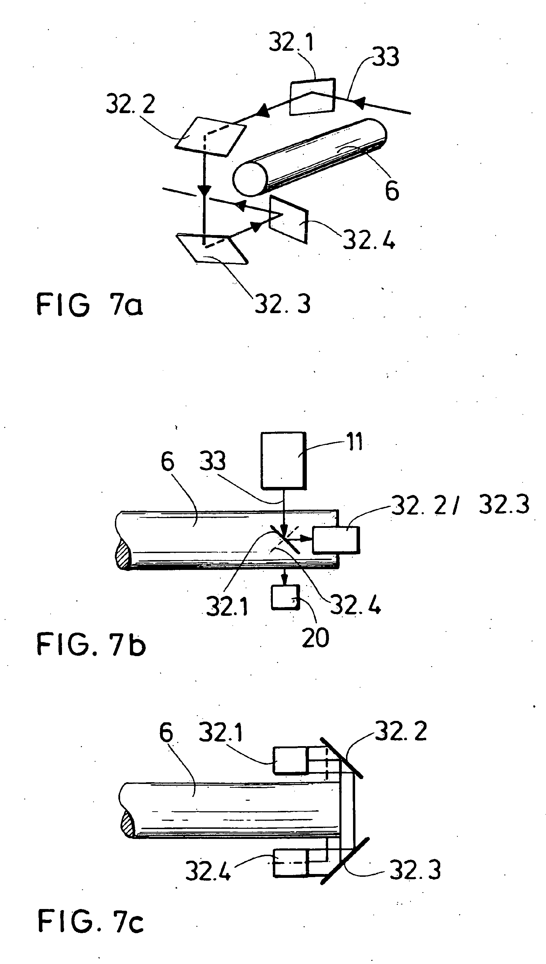

In den Figuren 7a bis 7d ist schematisch eine weitere Meßanordnung dargestellt, mittels der exakt die Lage bzw. Position des Endbereichs des Filterstabs 6 ebenfalls bestimmt werden kann, so daß mittels dieser erfaßten Postitionsdaten zusammen mit einer weiteren Meßanordnung am anderen Ende des Filterstabs 6 die Länge dieses Filterstabes ermittelt wird.

In Fig. 7a ist eine perspektivische Ansicht gezeigt. Ein von einer Laserlichtquelle ausgesendeter Lichtstrahl 33 wird mittels einer Spiegelanordnung, bestehend aus den Spiegel 32.1, 32.2, 32.3, 32.4 umgelenkt. Hierbei bilden die Spiegel 32.1, 32.2, 32.3, 32.4 eine Art Photonentreppe, wobei der Lichtstrahl 33 oberhalb des Filterstabes 6 mittels des Spiegels 32.1 um 90° umgelenkt wird und längsaxial parallel zum Filterstab 6 auf den Spiegel 32.2 geleitet wird. Der Spiegel 32.2 und der Spiegel 32.3 sind im Endbereich bzw. Kopfbereich des Filterstab 6 angeordnet, und zwar so, daß der auf den Spiegel 32.2 gegebene und umgelenkte Lichtstrahl 33 streifend auf das Kopfende des Filterstabs 6 geleitet wird, so daß ein Teil des vom Spiegel 32.2 umgelenkten Lichtstrahls vom Kopfende des Filterstabs 6 ausgeblendet wird. Der nicht ausgeblendete Teil dieses Lichtstrahls wird vom Spiegel 32.3 auf den Spiegel 32.4 weitergeleitet, der den teilausgeblendeten Lichtstrahl auf einen Zeilensensor weiterleitet.

Mittels des Intensitätsverlaufes des teilausgeblendeten Lichtstrahls kann die exakte Position des Kopfendes des Filterstabs 6 ermittelt werden.

In Fig. 7b ist eine Draufsicht auf die Meßanordnung mit den Spiegeln 32.1, 32.2 gezeigt. Der Spiegel 32.3 wird von dem oberen Spiegel 32.2 verdeckt, da diese senkrecht übereinander angeordnet sind. Der Spiegel 32.4, der unterhalb des Spiegels 32.1 und des Filterstabs 6 angeordnet ist, ist gestrichelt dargestellt. Der vom Spiegel 32.4 reflektierte und teilausgeblendete Lichtstrahl wird mittels des Zeilensensors 20 erfaßt.

In Fig. 7c ist die Meßanordnung im Längsschnitt gezeigt. Der vom Spiegel 32.3 weitergeleitete Lichtstrahl wird teilausgeblendet und bildet einen Schatten auf den Spiegeln 32.3 bzw. 32.4.

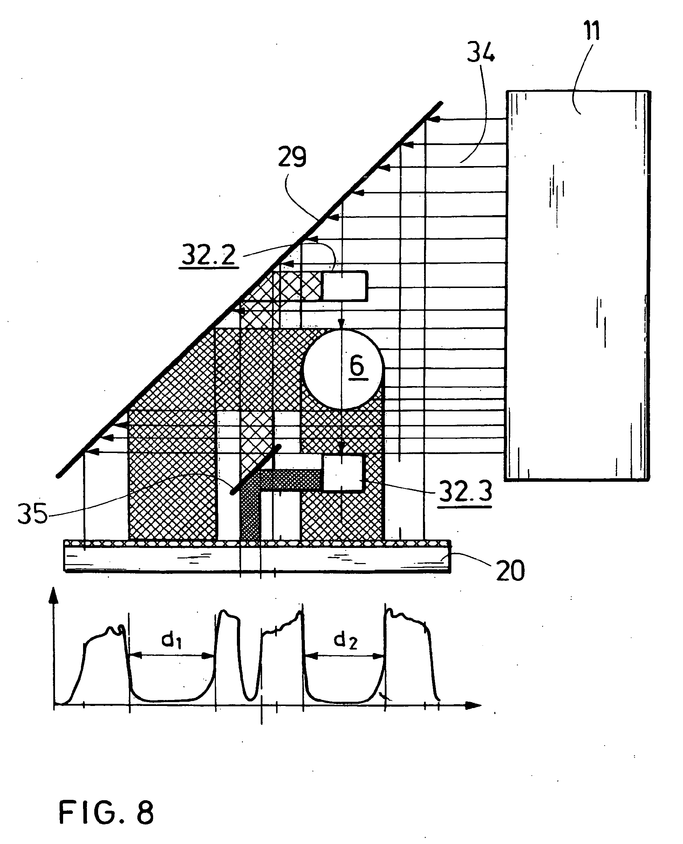

In Fig. 8 ist in einer schematischen Queransicht eine Kombination der aus Fig. 6 dargestellten Durchmessermessungen des Filterstabs 6 und der in den Figuren 7a bis 7c dargestellten Positionsmessungen des Filterstabs gezeigt. Durch die Kombination dieser beiden kombinierten Anordnungen von Spiegeln kann mittels einer Lichtquelle und eines Zeilensensors gleichzeitig der Durchmesser d₁, d₂ des Filterstabs 6 zweifach gemessen werden und zusätzlich simultan auch eine Positionmessung P des Kopfendes des Filterstabes 6 ermittelt werden. Für die Positionsangabe ist ein weiterer Spiegel 35 parallel verschoben zum Spiegel 29 angeordnet, der den vom Kopfende des Filterstabs 6 teilweise ausgeblendeten Lichtstrahl, der vom Spiegel 32.2 umgelenkt wird und auf die Spiegel 32.3 bzw. 32.4 (hier nicht dargestellt) geleitet wird, auf den Zeilensensor 20 umlenkt. Anhand des Intensitätsverlaufes der Helligkeit längs des Zeilensensors 20 wird zweifach der Durchmesser des Filterstabs 6 (Durchmesser d₁, d₂) ermittelt. Gleichzeitig wird die Position P des Kopfendes festgestellt.

Im Rahmen der Erfindung ist vorgesehen, daß an beiden Kopfenden eines Filterstabs 6 jeweils eine derartige Meßanordnung ausgebildet ist, die vorzugsweise um bspw. 45° versetzt zueinander um den Filterstab 6 bzw. den Kanal 5 angeordnet sind, so daß durch die ermittelten Positionsdaten der Kopfenden exakt die Länge des Filterstabs bestimmt wird und gleichzeitig eine Durchmessermessung mit insgesamt vier Messungen im Bereich der Kopfenden erfolgt. Die Meßanordnungen können in einem Winkelbereich von 1° bis 89° zueinander versetzt sein, so daß vier verschiedene Durchmessermessungen ausgeführt werden.

Darüber hinaus kann vorgesehen sein, daß eine erfindungsgemäße Meßvorrichtung zur Messung der Länge und des Durchmessers auf der Trommel 7 (Fig. 1) angeordnet ist. Zur Durchführungen der Messungen weist der Kanal 5 im Bereich der Meßorte Fenster oder dergleichen auf.

Im weiteren Ausgestaltungen werden die Messungen in periodischen Zeitabständen ausgeführt. Bei den periodischen Längenmessungen der Filterstäbe ist die Verwendung einer Lichtschranke nicht erforderlich. Bei den periodischen Durchmessermessungen werden hierdurch aufgeplatzte Filterstäbe leichter erfaßt.

Anhand der ermittelten Meßergebnisse der Länge und des Durchmessers kann überprüft werden, ob der Filterstab hinsichtlich seiner Länge und seines Durchmessers bestimmten Kriterien genügt, wobei bei zu großen Abweichungen von einem vorbestimmten Toleranzbereich der Filterstab aus dem Produktionsweg entfernt wird. Hierdurch werden nur Filterstäbe mit einer besonderen Güte zur Herstellung von Filterzigaretten oder Multisegmentfiltern verwendet.

### Bezugszeichenliste

- 1: Anschlußleitung
- 2: Bogenführung
- 3: Bremsrolle
- 4: Beschleunigerrolle
- 5: Kanal
- 6: Filterstab
- 7: Trommel
- 8: Magazin
- 9: Auffangbehälter
- 10: Meßvorrichtung
- 11: Laserlichtquelle
- 12: Lampe
- 13: Senor
- 14: Detektor (Kante)
- 15: Verzögerungsglied
- 16: Startglied
- 17: Leitung
- 18: Startglied (auslesen)
- 19: Verbindung
- 20: Zeilenkamera
- 21: Schatten
- 22: Leitung
- 23: Leitung
- 24: Mikrocomputer
- 25.1: Spiegel
- 25.2: Spiegel
- 26.1: Spiegel
- 26.2: Spiegel
- 27: Lichtstreifen
- 28.1: Teillichtstreifen
- 28.2: Teillichtstreifen
- 28.3: Teillichtstreifen
- 28.4: Teillichtstreifen
- 30: Lichtstreifen
- 29: Spiegel
- 31: Schatten
- 32.1: Spiegel
- 32.2: Spiegel
- 32.3: Spiegel
- 32.4: Spiegel
- 33: Lichtstrahl
- 34: Lichtstreifen
- 35: Spiegel
- L: Länge
- d₁: Durchmesser
- d₂: Durchmesser
- F: Förderrichtung
- P: Position
- P1: Position
- P2: Position

## Patentansprüche

1. Verfahren zur Messung wenigstens einer physikalischen,insbesondere geometrischen, Eigenschaft (L, d1, d2) von In einer Förderleitung (5) geförderten stabförmigen Artikeln (6) der Tabak verarbeitenden Industrie, insbesondere Filterstäbe (6), **dadurch gekennzeichnet, dass** als physikalische Eigenschaften (L, d1, d2) die Länge (L) und der Durchmesser (d1, d2) der Artikel (6) mittels einer optischen Messeinrichtung (10) gemessen werden.

2. Verfahren nach Anspruch 1, **dadurch gekennzeichnet, dass** die zwei unterschiedlichen physikalischen Eigenschaften (L, d1, d2) gleichzeitig gemessen werden.

3. Verfahren nach Anspruch 1 oder 2, **dadurch gekennzeichnet, dass** eine physikalische Eigenschaft (d1, d2) mehrmals, insbesondere gleichzeitig, gemessen wird.

4. Verfahren nach einem der Ansprüche 1 bis 3, **dadurch gekennzeichnet, dass** eine physikalische Eigenschaft (d1, d2) pneumatisch gemessen wird.

5. Verfahren nach einem oder mehreren der Ansprüche 1 bis 4, **dadurch gekennzeichnet, dass** nach Messung wenigstens einer physikalischen Eigenschaft (L, d1, d2) geprüft wird, ob das Messergebnis innerhalb eines vorbestimmten Messtoleranzbereiches liegt.

6. Verfahren nach Anspruch 5, **dadurch gekennzeichnet, dass** bei einer Abweichung des Messergebnisses der Artikel (6) aus der Förderleitung (7) und/oder dem Produktionsweg entfernt wird.

7. Verfahren nach einem oder mehreren der Ansprüche 1 bis 6, **dadurch gekennzeichnet, dass** die Messung nach Auslösung eines Startsignals, vorzugsweise einer Lichtschranke (12, 13), erfolgt.

8. Verfahren nach einem oder mehreren der Ansprüche 1 bis 7, **dadurch gekennzeichnet, dass** die wenigstens eine physikalische Eigenschaft (L, d1, d2) im Endbereich der Artikel (6) gemessen wird.

9. Verfahren nach einem oder mehreren der Ansprüche 1 bis 8, **dadurch gekennzeichnet, dass** die Messung, insbesondere die Messung der Länge (L), mittels zweier Messstellen entlang der Förderstrecke (5) der Artikel (6) erfolgt.

10. Verfahren nach einem oder mehreren der Ansprüche 1 bis 9, **dadurch gekennzeichnet, dass** die Artikel (6) und/oder die Messstellen mittels wenigstens einer Lichtquelle (11), insbesondere. Laserlichtquelle, mit Licht beaufschlagt werden.

11. Verfahren nach Anspruch 10, **dadurch gekennzeichnet, dass** die wenigstens eine physikalische Eigenschaft (L, d1, d2) anhand des durch die Lichtquelle (11) beaufschlagten Bereiches des Artikels (6) und erzeugten Helligkeitsprofils gemessen wird.

12. Verfahren nach Anspruch 11, **dadurch gekennzeichnet, dass** das Helligkeitsprofil mittels eines Sensors, insbesondere Zeilensensor (20), erfasst wird.

13. Vorrichtung zur Förderung von Filterstäben (6) zu einem Filtermagazin (8), wobei längsaxial geförderte Filterstäbe (6) queraxial dem Filtermagazin (8) zuführbar sind, wobei eine optische Messelnrlchtung (10) zur Messung wenigstens einer physikalischen Eigenschaft (L, d1, d2) der Filterstäbe (6) vorgesehen ist, **dadurch gekennzeichnet, dass** die Messeinrichtung (10) derart ausgebildet istdass gleichzeitig die Länge (L) und der Durchmesser (d1, d2) der Filterstäbe (6) gemessen werden.

14. Vorrichtung nach Anspruch 13, **dadurch gekennzeichnet, dass** die Messeinrichtung (10) zur Messung von geometrischen Eigenschaften (L, d1, d2) der Filterstäbe (6) ausgebildet ist.

15. Vorrichtung nach Anspruch 13 oder 14, **dadurch gekennzeichnet, dass** die Messeinrichtung (10) entlang einer Förderleitung (5) der Filterstäbe (6) angeordnet ist.

16. Vorrichtung nach einem der Ansprüche 13 bis 15, **dadurch gekennzeichnet, dass** die Messeinrichtung (10) zwischen einem Bremsmittel (3), insbesondere Bremsrollenpaar, und einem Beschleunigermittel (4), insbesondere Beschleunigerrollenpaar, für die Filterstäbe (6) angeordnet ist.

17. Vorrichtung nach einem der Ansprüche 13 bis 15, **dadurch gekennzeichnet, dass** die Messeinrichtung (10) an einem Querfördermittel (7), insbesondere Trommel (7), für die Filterstäbe (6) angeordnet ist.

18. Vorrichtung nach einem oder mehreren der Ansprüche 13 bis 17, **dadurch gekennzeichnet, dass** die Messeinrichtung (10) mit wenigstens einer Lichtquelle (11), insbesondere Laserlichtquelle, und wenigstens einem Sensor (20), insbesondere Zellensensor (20), ausgebildet ist.

19. Vorrichtung nach einem oder mehreren der Ansprüche 13 bis 18, **dadurch gekennzeichnet** die Messeinrichtung (10) wenigstens einen Spiegel (29) oder eine Spiegelanordnung (25.1, 25.2, 26.1, 26.2, 32.1, 32.2, 32.3, 32.4) aufweist.

20. Vorrichtung nach einem oder mehreren der Ansprüche 13 bis 19, **dadurch gekennzeichnet, dass** eine Auswerteeinrichtung (24) für die Messergebnisse der Messeinrichtung (10) vorgesehen ist.

21. Vorrichtung nach Anspruch 20, **dadurch gekennzeichnet, dass** die Auswerteeinrichtung (24) mit einer Auswurfeinrichtung für die Filterstäbe (6) verbunden ist.

## Claims

1. Method of measuring at least one physical, in particular geometric, property (L, d1, d2) of rod-shaped articles (6) of the tobacco-processing industry, in particular filter rods (6), that are conveyed in a conveyor line (5), **characterized in that** as physical properties (L, d1, d2) the length (L) and the diameter (d1, d2) of the articles (6) are measured by means of an optical measuring device (10).

2. Method according to claim 1, **characterized in that** the two different physical properties (L, d1, d2) are measured simultaneously.

3. Method according to claim 1 or 2, **characterized in that** one physical property (d1, d2) is measured a plurality of times, in particular simultaneously.

4. Method according to one of claims 1 to 3, **characterized in that** one physical property (d1, d2) is measured pneumatically.

5. Method according to one or more of claims 1 to 4, **characterized in that**, after measurement of at least one physical property (L, d1, d2), the measurement result is checked to ascertain whether it lies within a predetermined measurement tolerance band.

6. Method according to claim 5, **characterized in that** in the event of a deviation of the measurement result the article (6) is removed from the conveyor line (7) and/or the production path.

7. Method according to one or more of claims 1 to 6, **characterized in that** the measurement is effected after tripping of a start signal, preferably of a light barrier (12, 13).

8. Method according to one or more of claims 1 to 7, **characterized in that** the at least one physical property (L, d1, d2) is measured in the end region of the article (6).

9. Method according to one or more of claims 1 to 8, **characterized in that** the measurement, in particular the measurement of the length (L), is effected by means of two measuring points along the conveying section (5) of the article (6).

10. Method according to one or more of claims 1 to 9, **characterized in that** the article (6) and/or the measuring points are acted upon by light by means of at least one light source (11), in particular a laser light source.

11. Method according to claim 10, **characterized in that** the at least one physical property (L, d1, d2) is measured by way of the region of the article (6) acted upon by the light source (11) and by way of the generated brightness profile.

12. Method according to claim 11, **characterized in that** the brightness profile is acquired by means of a sensor, in particular a CCD line array (20).

13. Apparatus for conveying filter rods (6) to a filter magazine (8), wherein filter rods (6) conveyed in the direction of their longitudinal axis are feedable in the direction of their transverse axis to the filter magazine (8), wherein an optical measuring device (10) is provided for measuring at least one physical property (L, d1, d2) of the filter rods (6), **characterized in that** the measuring device (10) is designed in such a way that the length (L) and the diameter (d1, d2) of the filter rods (6) are measured simultaneously.

14. Apparatus according to claim 13, **characterized in that** the measuring device (10) is designed for measuring geometric properties (L, d1, d2) of the filter rods (6).

15. Apparatus according to claim 13 or 14, **characterized in that** the measuring device (10) is disposed along a conveyor line (5) of the filter rods (6).

16. Apparatus according to one of claims 13 to 15, **characterized in that** the measuring device (10) is disposed between a braking means (3), in particular a braking roller pair, and an accelerating means (4), in particular an accelerating roller pair, for the filter rods (6).

17. Apparatus according to one of claims 13 to 15, **characterized in that** the measuring device (10) is disposed on a transverse conveying means (7), in particular drum (7), for the filter rods (6).

18. Apparatus according to one or more of claims 13 to 17, **characterized in that** the measuring device (10) is designed with at least one light source (11), in particular a laser light source, and at least one sensor (20), in particular a CCD line array (20).

19. Apparatus according to one or more of claims 13 to 18, **characterized in that** the measuring device (10) has at least one mirror (29) or a mirror arrangement (25.1, 25.2, 26.1, 26.2, 32.1, 32.2, 32.3, 32.4).

20. Apparatus according to one or more of claims 13 to 19, **characterized in that** an evaluation device (24) is provided for the measurement results of the measuring device (10).

21. Apparatus according to claim 20, **characterized in that** the evaluation device (24) is connected to an ejection device for the filter rods (6).

## Revendications

1. Procédé pour la mesure d'au moins une caractéristique physique (L, d1, d2), en particulier géométrique, d'articles (6), en forme de tige, de l'industrie de transformation du tabac, en particulier de tiges de filtre (6), transportés dans un conduit de transport (5), **caractérisé en ce qu'**en tant que caractéristiques physiques (L, d1, d2) sont mesurés, au moyen d'un appareil de mesure optique (10), la longueur (L) et le diamètre (d1, d2) des articles (6).

2. Procédé selon la revendication 1, **caractérisé en ce que** les deux caractéristiques physiques (L, d1, d2) différentes sont mesurées simultanément.

3. Procédé selon la revendication 1 ou 2, **caractérisé en ce qu'**une caractéristique physique (d1, d2) est mesurée plusieurs fois, en particulier dans le même temps.

4. Procédé selon l'une des revendications 1 à 3, **caractérisé en ce qu'**une caractéristique physique (d1, d2) est mesurée par voie pneumatique.

5. Procédé selon une ou plusieurs des revendications 1 à 4, **caractérisé en ce qu'**après la mesure d'au moins une caractéristique physique (L, d1, d2), on vérifie si le résultat de la mesure se trouve à l'intérieur d'une plage de tolérance de mesure prédéterminée.

6. Procédé selon la revendication 5, **caractérisé en ce que**, dans le cas d'une divergence du résultat de la mesure, l'article (6) est retiré du conduit de transport (7) et/ou du circuit de production.

7. Procédé selon une ou plusieurs des revendications 1 à 6, **caractérisé en ce que** la mesure s'effectue après déclenchement d'un signal de lancement, de préférence d'une cellule photoélectrique (12, 13).

8. Procédé selon une ou plusieurs des revendications 1 à 7, **caractérisé en ce que** la au moins une caractéristique physique (L, d1, d2) est mesurée dans la partie d'extrémité des articles (6).

9. Procédé selon une ou plusieurs des revendications 1 à 8, **caractérisé en ce que** la mesure, en particulier la mesure de la longueur (L), s'effectue au moyen de deux postes de mesure le long du trajet de transport (5) des articles (6).

10. Procédé selon une ou plusieurs des revendications 1 à 9, **caractérisé en ce que** les articles (6) et/ou les postes de mesure sont frappés avec de la lumière au moyen d'au moins une source de lumière (11), en particulier une source de lumière laser.

11. Procédé selon la revendication 10, **caractérisé en ce que** la au moins une caractéristique physique (L, d1, d2) est mesurée à l'aide de la partie de l'article (6) frappée par la source de lumière (11) et du profil de luminance généré.

12. Procédé selon la revendication 11, **caractérisé en ce que** le profil de luminance est détecté au moyen d'un capteur, en particulier d'un capteur de lignes (20).

13. Dispositif pour le transport de tiges de filtre (6) jusqu'à un magasin à filtres (8), selon lequel des tiges de filtre (6), transportées dans la direction de leur axe, peuvent être amenées au magasin à filtres (8) suivant une direction transversale à leur axe, un appareil de mesure optique (10) étant alors prévu pour la mesure d'au moins une caractéristique physique (L, d1, d2) des tiges de filtre (6), **caractérisé en ce que** l'appareil de mesure (10) est conçu d'une manière telle, que la longueur (L) et le diamètre (d1, d2) des tiges de filtre (6) soient mesurés simultanément.

14. Dispositif selon la revendication 13, **caractérisé en ce que** l'appareil de mesure (10) est conçu pour mesurer des caractéristiques géométriques (L, d1, d2) des tiges de filtre (6).

15. Dispositif selon la revendication 13 ou 14, **caractérisé en ce que** l'appareil de mesure (10) est disposé le long d'un conduit de transport (5) des tiges de filtre (6).

16. Dispositif selon l'une des revendications 13 à 15, **caractérisé en ce que** l'appareil de mesure (10) est disposé entre un moyen de freinage (3), en particulier une paire de galets de freinage, et un moyen accélérateur (4), en particulier une paire de galets accélérateurs, pour les tiges de filtre (6).

17. Dispositif selon l'une des revendications 13 à 15, **caractérisé en ce que** l'appareil de mesure (10) est disposé sur un moyen de transport transversal (7), en particulier un tambour (7), pour les tiges de filtre (6).

18. Dispositif selon une ou plusieurs des revendications 13 à 17, **caractérisé en ce que** l'appareil de mesure (10) est doté d'au moins une source de lumière (11), en particulier une source de lumière laser, et d'au moins un capteur (20), en particulier un capteur de lignes (20).

19. Dispositif selon une ou plusieurs des revendications 13 à 18, **caractérisé en ce que** l'appareil de mesure (10) présente au moins un miroir (29) ou un système de miroirs (25.1, 25.2, 26.1, 26.2, 32.1, 32.2, 32.3, 32.4).

20. Dispositif selon une ou plusieurs des revendications 13 à 19, **caractérisé en ce qu'**un appareil d'évaluation (24) pour les résultats de la mesure pratiquée par l'appareil de mesure (10), est prévu.

21. Dispositif selon la revendication 20, **caractérisé en ce que** l'appareil d'évaluation (24) est relié à un mécanisme d'éjection pour les tiges de filtre (6).
